# EUROPÄISCHE PATENTSCHRIFT

(11) **EP 3 227 245 B1**
(45) Veröffentlichungstag und Bekanntmachung des Hinweises auf die Patenterteilung: **17.10.2018**
(21) Anmeldenummer: 16724913.5
(22) Anmeldetag: 26.05.2016
(51) Int. Cl.: C03C 17/34, C03C 17/42, C08J 7/04, C09D 183/04

(54) **VERFAHREN ZUR HERSTELLUNG EINES OPTISCHEN GLASES MIT ANTIFOG-BESCHICHTUNG**
METHOD FOR PRODUCING AN OPTICAL GLASS HAVING AN ANTIFOG COATING
PROCÉDÉ DE FABRICATION D'UN VERRE OPTIQUE À REVÊTEMENT ANTI-BUÉE

(30) Priorität: 28.05.2015 DE 102015209794
(43) Veröffentlichungstag der Anmeldung: 11.10.2017
(73) Patentinhaber: Carl Zeiss Vision International GmbH, 73430 Aalen (DE)
(72) Erfinder: GLÖGE, Thomas, 73614 Schorndorf (DE)
(74) Vertreter: Glawe, Delfs, Moll
(86) Internationale Anmeldenummer: PCT/EP2016/061892
(87) Internationale Veröffentlichungsnummer: WO 2016/189082

(56) Entgegenhaltungen:
- EP-A1- 1 473 344
- EP-A1- 2 664 659

## Beschreibung

Gegenstand der Erfindung ist ein Verfahren zur Herstellung eines optischen Glases mit einer Antifog-Beschichtung.

Optische Gläser wie beispielsweise Linsen, insbesondere Brillengläser, Kontaktlinsen oder sonstige optische Gläser zur Korrektur von Fehlsichtigkeit, sind aus offenkundiger Vorbenutzung bekannt. Sie weisen häufig eine Antireflex-Beschichtung auf, die auch Entspiegelung genannt wird. Dabei handelt es sich häufig um eine Mehrzahl übereinander angeordneter Beschichtungen von Materialien mit unterschiedlichen Brechungsindices, die in der Summe die gewünschte Entspiegelung bewirken.

Ebenfalls bekannt ist es, optische Gläser mit einer Beschichtung zu versehen, die das Beschlagen verhindern soll (Antifog-Beschichtung). In der Regel soll eine solche Beschichtung den Kontaktwinkel von sich auf der Oberfläche absetzenden Wassertröpfchen verkleinern, so dass sich die Lichtstreuung vermindert und es zu keiner oder allenfalls einer geringen optischen Trübung kommt. Es ist ebenfalls bekannt, optische Gläser mit Beschichtungen zu versehen, die in der Summe Antireflexions- und Antifog-Eigenschaften kombinieren.

Der vorliegenden Erfindung liegt die Aufgabe zu Grunde, ein Verfahren der eingangs genannten Art zu schaffen, mittels dem sich optische Gläser mit guten und dauerhaften Antifog-Eigenschaften herstellen lassen.

Gelöst wird diese Aufgabe durch ein Verfahren mit den folgenden Schritten:
a. zur Verfügung stellen eines optischen Glases,
b. Herstellen einer Schicht, die Si-H-Gruppen (Silangruppen) aufweist,
c. Reagierenlassen der Silangruppen mit einer Verbindung, die hydrophile Gruppen und wenigstens eine mit der Silangruppe reaktive Gruppe aufweist.

Kern der Erfindung ist es, dass durch das erfindungsgemäße Verfahren die in Schritt c. aufgebrachte Antifog-Beschichtung mittels gegen Hydrolyse stabilen Si-C-Bindungen (kovalent) mit den Si-Atomen der in Schritt b. hergestellten Schicht verbunden ist. Diese Si-Atome wiederum sind mit dem optischen Glas, vorzugsweise einer darauf aufgebrachten Antireflex-Beschichtung, verbunden.

Bei dem erfindungsgemäßen Verfahren wird zunächst auf der Oberfläche des Glases (vorzugsweise der darauf aufgebrachten Antireflex-Beschichtung) eine Schicht mit reaktiven Si-H-Gruppen hergestellt, im nächsten Schritt werden an diesen reaktiven Si-H-Gruppen hydrophile Gruppen anreagieren gelassen.

Zunächst seien einige im Rahmen der Erfindung verwendete Begriffe erläutert.

Bei optischen Gläsern handelt es sich um Elemente mit transmissiven Eigenschaften für optische Zwecke. Bevorzugt handelt es sich um Gläser für ophthalmologische Zwecke wie beispielsweise Brillengläser oder Kontaktlinsen. Der Begriff Glas ist dabei funktional zu verstehen und umfasst beispielsweise sowohl übliche (anorganische) Gläser wie insbesondere Silikatgläser als auch transparente Polymere und sonstige Kunststoffgläser. Es kann sich dabei um ein bekanntes, zur Herstellung von Brillengläsern verwendetes Polymer handeln, beispielhaft genannt seien CR-39® (Polyallyldiglycolcarbonat (PDAC)), CR-607® und Trivex® (stickstoffmodifiziertes Polyurethan) von PPG Industries sowie die MR-Serie (Thiourethanpolymere) von Mitsui Chemicals. Geeignete Polymere sind dem Fachmann geläufig.

Die Gläser weisen bevorzugt eine Antireflex-Beschichtung auf. Es handelt sich dabei in der Regel um eine oder mehrere dünne Schichten, die einen optischen Brechungsindex aufweisen, der von dem Index des Glasmaterials abweicht. Bei mehreren Schichten weichen die Indices auch voneinander ab. Details sind dem Fachmann geläufig und bedürfen hier keiner näheren Erläuterung. Die vorliegende Erfindung kann ebenfalls Anwendung finden bei silikathaltigen Hartgläsern ohne Antireflex-Beschichtung. Entscheidend für den Erfolg des erfindungsgemäßen Verfahrens ist es, dass an der Oberfläche Si-Atome zur Verfügung stehen, an die das erfindungsgemäße Verfahren die beschriebene Antifog-Beschichtung anbinden kann.

Bei einer bevorzugten Ausführungsform der Erfindung umfassen die optischen Gläser Kunststoffgläser, vorzugsweise PDAC-, Polythiourethan- oder Episulfidgläser, oder mineralische Hartgläser, vorzugsweise Krongläser oder Flintgläser, und eine auf den Kunststoffgläsern oder mineralischen Hartgläsern aufgebrachte außenliegende Antireflex-Beschichtung, wobei die Antireflex-Beschichtung wenigstens zwei diskrete Schichten umfasst und die außenliegende Schicht der Antireflex-Beschichtung wenigstens ein Siliziumoxid, Siliziumhydroxid und/oder Siliziumoxidhydrat (SiOₓ) umfasst. Mit außenliegender Beschichtung bzw. außenliegender Schicht ist diejenige Beschichtung bzw. Schicht gemeint, welche sich am weitesten entfernt von der Oberfläche des Kunststoffglases oder mineralischen Hartglases befindet, unabhängig davon, ob die Vorderseitenoberfläche oder die Rückseitenoberfläche des Kunststoffglases oder des mineralischen Hartglases betrachtet wird. Die Schichtdicke der außenliegenden Siliziumoxid-, Siliziumhydroxid- und/oder Siliziumoxidhydratschicht liegt bei dieser Ausführungsform bevorzugt in einem Bereich von 2 nm bis 400 nm, weiter bevorzugt in einem Bereich von 14 nm bis 190 nm, besonders bevorzugt in einem Bereich von 21 nm bis 140 nm und ganz bevorzugt in einem Bereich von 40 nm bis 100 nm. Die Schichtdicke der außenliegenden Siliziumoxid-, Siliziumhydroxid- und/oder Siliziumoxidhydratschicht wird vorzugsweise über reflektometrische Dünnschichtmessung, vorzugsweise mit dem Messgerät ZEISS MCS 600, bestimmt.

Eine Antifog-Beschichtung verhindert ein Beschlagen in feuchter, insbesondere feuchter und (im Vergleich zur Oberflächentemperatur des Glases) warmer Umgebung. In der Regel bewirkt eine solche Beschichtung, dass sich kondensierende Wassertröpfchen auf der Oberfläche eines beschichteten optischen Glases mit einem kleinen Kontaktwinkel niederschlagen und im Idealfall einen transparenten Wasserfilm bilden. Eine solche Beschichtung weist hydrophile Eigenschaften auf.

Durch das erfindungsgemäße Verfahren wird erreicht, dass die Antifog-Beschichtung mittels Si-C-Bindungen an Si-Atome anbindet, die wiederum mit der Glasoberfläche bzw. der Antireflex-Beschichtung verbunden sind.

Die Erfindung hat erkannt, dass die im Stand der Technik übliche Anbindung mittels Silanol-Bindungen (Si-O-C) nachteilig ist, da diese Bindungen unter den üblichen Anwendungsbedingungen eines Brillenglases hydrolysieren können, die die Antifog-Wirkung hervorrufenden Gruppen sich damit von der Oberfläche lösen und dadurch die gewünschte Antifog-Wirkung vermindert wird bzw. verloren geht.

Die Erfindung ermöglicht es, mit hoher Selektivität aktive Substanzen für eine Antifog-Wirkung fest mit der Oberfläche des Glases bzw. dessen Antireflex-Beschichtung zu verbinden, so dass deren hydrolytische Abtrennung unmöglich ist. Es können bevorzugt dünne Schichten (bevorzugt <100 nm, weiter vorzugsweise <30 nm) bis hin zu monomolekularen Schichten aufgebracht werden.

Im Rahmen der Erfindung sind die Si-Atome Bestandteil der Glasoberfläche (vorzugsweise der Antireflex-Beschichtung) oder aber mit dieser verbunden. Sehr häufig besteht die nach außen weisende Schicht einer mehrlagigen Antireflex-Beschichtung aus Silikat oder enthält Silikat, so dass an dieser Oberfläche Si-Atome für eine Si-C-Bindung grundsätzlich zur Verfügung stehen. Sie können auf unten noch näher beschriebene erfindungsgemäße Weise für eine solche Bindung zugänglich gemacht werden. Alternativ oder zusätzlich ist es erfindungsgemäß ebenfalls möglich, die Oberfläche des Glases bzw. der Antireflex-Beschichtung mit Silanen zu belegen, wie dies unten näher beschrieben wird.

Die Antifog-Beschichtung weist hydrophile Gruppen auf. Diese bewirken, dass Wasser sich auf der Oberfläche nicht mit einem großen Kontaktwinkel als einzelne Tröpfchen absetzen kann, so dass es zu keiner oder nur geringer Lichtstreuung kommt und keine oder nur eine geringfügige Trübung entsteht. Bevorzugt ist es, wenn der Kontaktwinkel auch längerfristig unter 10° bleibt.

Optische Gläser mit erfindungsgemäßer Antifog-Beschichtung weisen vorzugsweise einen Kontaktwinkel zwischen Wassertropfen und beschichteter Glasoberfläche von ≤ 10° auf, bevorzugt liegt der Kontaktwinkel in einem Bereich von 1° bis 9°, besonders bevorzugt in einem Bereich von 0,5° bis 7° und ganz besonders bevorzugt in einem Bereich von 0° bis 5°. Zur Bestimmung des Kontaktwinkels wird ein sich auf der Oberfläche des beschichteten optischen Glases befindlicher Wassertropfen von der Seite photographisch aufgenommen und der Winkel ausgemessen, den das Wassertropfen zur beschichteten Oberfläche des optischen Glases bildet. Der Kontaktwinkel wird vorzugsweise mit dem Messgerät KRÜSS MSA oder KRÜSS DSA100 vermessen.

Geeignete hydrophile Gruppen sind dem Fachmann bekannt und im Stand der Technik umfangreich beschrieben, beispielhaft sei hier auf die DE 10 2012 009 691 A1 verwiesen. Diese Schrift wird durch Bezugnahme darauf zum Gegenstand auch der vorliegenden Offenbarung gemacht.

In DE 10 2012 009 691 A1 wird offenbart, ein bereits mit hydrophilen Gruppen versehenes Halogen- oder Alkoxysilan mit einer reaktiven Oberflächengruppe des Glases unter Ausbildung von Si-O-Bindungen reagieren zu lassen. Im Unterschied zur vorliegenden Erfindung wird somit in einem einzigen Reaktionsschritt eine Antifog-Beschichtung aufgebracht. Gemäß diesem Verfahren des Standes der Technik hergestellte Antifog-Beschichtungen sind deutlich empfindlicher gegen Hydrolyse.

Unter den geeigneten hydrophilen Gruppen der erfindungsgemäßen Antifog-Beschichtung sind Polyoxyalkylengruppen, vorzugsweise Polyoxyethylen- und/oder Polyoxypropylengruppen, bevorzugt. Die Polyoxyalkylen-Kettenlänge beträgt bevorzugt 2 bis 10, weiter vorzugsweise 2 bis 6, weiter vorzugsweise 3 bis 5 oder 4 bis 5 Oxyalkyleneinheiten. Bei der Kettenlänge der einzelnen Alkyleneinheit sind 2 bis 4 C-Atome (Oxyethylen-, Oxypropylen- oder Oxybutyleneinheiten) bevorzugt. Bevorzugt ist es weiter, dass die Polyoxyalkylengruppen wenigstens zwei mit den Silangruppen reaktive Gruppen aufweisen. Sie können dann im Wege einer so genannten Schleifenbildung zweifach oder mehrfach an die Oberfläche angebunden werden, so dass die Stabilität insbesondere gegenüber Hydrolyse weiter erhöht wird.

Das Herstellen einer Schicht mit Si-H-Gruppen kann entweder dergestalt erfolgen, dass an der Oberfläche als Bestandteil der Antireflex-Beschichtung bereits vorhandene Si-Atome derart modifiziert, in der Regel reduziert, werden, dass sie reaktive Si-H-Bindungen tragen. Alternativ ist es möglich, zusätzliche Si-Atome unter solchen Bedingungen auf die Oberfläche der Antireflex-Beschichtung aufzubringen, dass die gewünschten reaktiven Si-H-Gruppen entstehen.

Gemäß einer ersten Variante des erfindungsgemäßen Verfahrens erfolgt in Schritt b. ein Aufbringen eines Halogensilans, bevorzugt Halogensilans mit 2 oder 3 Halogenatomen, weiter bevorzugt Chlorsilans. Das Aufbringen kann durch dem Fachmann geläufige Techniken wie beispielsweise chemische Gasphasenabscheidung (Chemical Vapor Deposition, CVD) oder auch in Lösung erfolgen. Die Halogensilane reagieren mit Hydroxygruppen (Silanolgruppen) der Antireflex-Beschichtung unter Ausbildung von Siloxan-Bindungen.

Als Halogensilan kann beispielsweise Trichlorosilan, Dichlorosilan, Chlorosilan, Dichloromethylsilan, Chlorodimethylsilan, Chloro(methyl)phenylsilan, Chlorophenylsilan, Dichlorophenylsilan, Ethyldichlorosilan, Diisobutylchlorosilan, Isobutyldichlorosilan und/oder Dichloroethylsilan eingesetzt werden.

Bevorzugt wird als Halogensilan Chlorophenylsilan, Dichloroethylsilan, Trichlorosilan, Dichlorosilan und/oder Chlorosilan eingesetzt.

In Schritt b. des erfindungsgemäßen Verfahrens wird ein optional beschichtetes optisches Glas in eine wenigstens ein Halogensilan umfassende Lösung gegeben, wobei die Lösung das wenigstens eine Halogensilan in einem Anteil aus einem Bereich von 0,1 bis 1,0 Gewichts-%, bevorzugt aus einem Bereich von 0,2 bis 0,8 Gew.-%, besonders bevorzugt aus einem Bereich von 0,3 bis 0,6 Gew.-%, jeweils bezogen auf das Gesamtgewicht der Lösung, umfasst. Als Lösungsmittel wird hierbei vorzugsweise ein aprotisch unpolares Lösungsmittel, bevorzugt Toluol oder Xylol eingesetzt.

Die vorstehend genannten Mengenangaben genannten Mengenangaben gelten auch dann, wenn zwei oder mehr, voneinander verschiedene Halogensilane eingesetzt werden.

Gemäß einer weiteren Variante des erfindungsgemäßen Verfahrens erfolgt Schritt b. durch Aufbringen von SiOx unter reduktiven Bedingungen in Anwesenheit von Wasserstoff.

Gemäß noch einer weiteren Variante der Erfindung ist es möglich, dass Schritt b. erfolgt durch Reduktion von Si-O-Gruppen an der Oberfläche der Antireflex-Beschichtung mit radikalischem Wasserstoff. Dies kann insbesondere in einem Plasma, beispielsweise einem RF Plasma in Anwesenheit von Wasserstoff erfolgen. Vorzugsweise wird ein Niederdruck-Plasma mit reinem Wasserstoff verwendet. Das Plasma wird in einem Tetra 100 der Firma Diener electronic erzeugt.

Die Anbindung der Antifog-Schicht an die reaktiven Si-H-Gruppen kann erfindungsgemäß bevorzugt durch eine Hydrosilylierung erfolgen. Die Hydrosilylierung bezeichnet die Addition eines Silans an eine Doppelbindung in Gegenwart eines Katalysators, in der Regel eines Platin-Katalysators. Die Details der Reaktion sind dem Fachmann geläufig und bedürfen hier keiner näheren Erläuterung.

Als Platinkatalysator können beispielsweise Platin(0)-1,3-divinyl-1,1,3,3-tetramethyldisiloxan (CAS [68478-92-2]), cis-Bis(benzonitril)dichloroplatinum(II) (CAS [15617-19-3]), Platin (0), Platin (0) auf einem Aluminiumoxid-, Siliziumoxid- oder Aktivkohle-Träger, Platin(II)chlorid (CAS [10025-65-7]), Platin(IV)chlorid (CAS [13454-96-1]), Hexachloridoplatinsäure (CAS [16941-12-1]), ein Komplex aus Platinchlorid und Alkoholen, Aldehyden oder Ketonen, ein Platinolefinkomplex, wie z.B. Pt(CH₂=CH₂)₂(PPh₃)₂ oder Pt(CH₂=CH₂)₂Cl₂, ein Platinphosphinkomplex, wie z.B. Pt(PPh3)₄ oder Pt(PBu₃)₄ und/oder ein Platinphosphitkomplex, wie z.B. Pt[P(OPh)₃]₄ oder Pt[P(OBu)₃]₄, eingesetzt werden.

Bevorzugt wird als Platinkatalysator Platin(0)-1,3-divinyl-1,1,3,3-tetramethyldisiloxan (CAS [68478-92-2]) oder Hexachloridoplatinsäure (CAS [16941-12-1]) eingesetzt.

Es ist bevorzugt, wenn die in Schritt c. eingesetzte Verbindung wenigstens eine reaktive C=C-Doppelbindung, bevorzugt wenigstens eine Vinylgruppe aufweist. Besonders bevorzugt handelt es sich um eine Vinyl-Polyoxyalkylenverbindung.

Bei einer bevorzugten Ausführungsform wird in Schritt c. eine Verbindung der Formel RR¹C=CR²-Aₓ-[O-CₙHₘ]_{y}-R³ (I) eingesetzt, wobei
R = H, C₁-C₁₀-Alkyl linear oder C₁-C₁₀-Alkyl verzweigt, bevorzugt R = H oder Me, besonders bevorzugt R = H;
R¹ = H, C₁-C₁₀-Alkyl linear oder C₁-C₁₀-Alkyl verzweigt, bevorzugt R¹ = H oder Me, besonders bevorzugt R¹ = H;
R² = H oder Me, bevorzugt R² = H;
A = C₁-C₁₀-Alkyl linear oder C₁-C₁₀-Alkyl verzweigt, optional jeweils mit OH, NH₂ oder SO₂ funktionalisiert, bevorzugt C₁-C₄-Alkyl linear, besonders bevorzugt CH₂;
x = 0-1;
CₙHₘ = linear oder verzweigt, optional jeweils mit OH oder NH₂ funktionalisiert, bevorzugt linear und nicht funktionalisiert; n = 1-10; m= 2n;
y = 0-20, bevorzugt 1-15, besonders bevorzugt 3-11;
R³ = AₓCR²=CRR¹, SO₃Na, H oder OH, bevorzugt Aₓ-CR²=CRR¹.

Bei der in Schritt c. eingesetzten Verbindung kann es sich beispielsweise um Poly(ethylenglykol)divinylether (CAS [50856-26-3]), Diethylenglycoldivinylether (CAS [764-99-8]), Di(ethylenglycol)vinylether (CAS [929-37-3]), Triethylenglykoldivinylether (CAS [765-12-8]), Allylether (CAS [557-40-4]), Hydroxybutylvinylether (CAS [17832-28-9]), Allylalkohol (CAS [107-18-6]), Allyloxyethanol (CAS [111-45-5]), 3-Allyloxy-2-hydroxy-1-propansulfonsäure Natriumsalz (CAS [52556-42-0]) und/oder 3-Allyloxy-1,2-propandiol (CAS [123-34-2]) handeln. Vorzugsweise wird in Schritt c. Poly(ethylenglykol)divinylether (CAS [50856-26-3]), Diethylenglycoldivinylether (CAS [764-99-8]), Di(ethylenglycol)vinylether (CAS [929-37-3]) und/oder Triethylenglykoldivinylether (CAS [765-12-8]) eingesetzt.

Die in Schritt b. erhaltenen optischen Gläser werden für die in Schritt c. vorgesehene Hydrosilylierung vorzugsweise in eine die Verbindung (I) enthaltende Lösung gegeben, wobei der Anteil an Verbindung (I) in einem Bereich von 0,4 bis 1,8 Gewichts-%, bevorzugt in einem Bereich von 0,5 bis 1,4 Gewichts-%, besonders bevorzugt in einem Bereich von 0,6 bis 1,2 Gewichts-%, jeweils bezogen auf das Gesamtgewicht der Lösung, liegt. Als Lösungsmittel wird ein aprotisches unpolares Lösungsmittel, vorzugsweise Toluol oder Xylol, eingesetzt.

Erfindungsgemäß können so Polyoxyalkylengruppen mittels Si-C-Bindungen dauerhaft und hydrolysestabil an der Oberfläche der Antireflex-Beschichtung verankert werden.

Gegenstand der vorliegenden Erfindung ist ferner ein optisches Glas mit einer Antifog-Beschichtung, erhältlich durch ein erfindungsgemäßes Verfahren. Das erfindungsgemäße optische Glas zeichnet sich aus durch eine hohe Beständigkeit und Dauerhaftigkeit der Antifog-Beschichtung aufgrund der Anbindung mittels gegen Hydrolyse stabilen Si-C-Bindungen.

Bei einer bevorzugten Ausführungsform der Erfindung umfassen die optischen Gläser, insbesondere Brillengläser, mit einer Antifog-Beschichtung im sichtbaren Spektralbereich transparente Kunststoffgläser, vorzugsweise PDAC-, Polythiourethan- oder Episulfidgläser, und eine auf den Kunststoffgläsern aufgebrachte Beschichtung, wobei die Beschichtung, ausgehend von der jeweiligen Vorderseite bzw. Rückseite eines Kunststoffglases, wenigstens
a) eine Hartlackschicht, umfassend vorzugsweise eine Sol-Gel-Hartlackzusammensetzung auf Basis eines Arylpolymers, eines Epoxypolymers, eines Urethanpolymers, eines Melaminpolymers und/oder auf Basis eines anorganischen Materials, bevorzugt Siloxans,
b) eine Antireflexschicht, welche vorzugsweise wenigstens drei diskrete Schichten, jeweils aus oder mit wenigstens einem Metalloxid, Metallhydroxid und/oder Metalloxidhydrat von Al, Si, Ti, Zr, Ce, Sn, In, Cr und/oder Mischungen hiervon umfasst, wobei die am weitesten von der Vorderseite bzw. Rückseite des Kunststoffglases entfernte Schicht der Antireflexschicht Siliziumoxid, Siliziumhydroxid und/oder Siliziumoxidhydrat umfasst,
c) eine Antifogschicht
umfasst, wobei die Antifogschicht erhältlich ist durch kovalente Anbindung eines Halogensilans, vorzugsweise Chlorsilans, an die Antireflexschicht aus b) und anschließender Umsetzung mit einer Verbindung der Formel (I).

Bei einer weiteren Ausführungsform der Erfindung umfassen die optischen Gläser, insbesondere Brillengläser, mit einer Anti-fog-Beschichtung im sichtbaren Spektralbereich transparente Kunststoffgläser, vorzugsweise PDAC-Gläser, und eine auf den Kunststoffgläsern aufgebrachte Beschichtung, wobei die Beschichtung, ausgehend von der jeweiligen Vorderseite bzw. Rückseite der Kunststoffgläser, wenigstens
a) eine Schicht gemäß Anspruch 1 der EP 2 578 649 A1 umfasst,
b) eine Antireflexschicht, welche wenigstens drei diskrete Schichten umfasst, wobei diese Schichten jeweils einen voneinander verschiedenen Brechungsindex aufweisen, wobei die Schichten mit hohem Brechungsindex (n ≥ 1,6, insbesondere bei einer Wellenlänge von 550 nm) und niedrigem Brechungsindex (n < 1,6, insbesondere bei einer Wellenlänge von 550 nm) vorzugsweise alternierend angeordnet sind und die am weitesten von der Vorderseite bzw. Rückseite des Kunststoffglases entfernte der Schicht innerhalb der Antireflexschicht wenigstens ein Siliziumoxid, Siliziumhydroxid und/oder Siliziumoxidhydrat umfasst,
c) eine Antifog-Schicht
umfasst, wobei die Antifog-Schicht erhältlich ist durch Behandlung der mit einer Antireflexschicht b) beschichteten Kunststoffgläser in einem Niederdruck-Plasma mit reinem Wasserstoff und anschließender Umsetzung mit einer Verbindung der Formel (I) in Gegenwart eines Pt-Katalysators.

Bei einer besonders bevorzugten Ausführungsform der Erfindung umfassen die optischen Gläser, insbesondere Brillengläser, mit einer Antifog-Beschichtung im sichtbaren Spektralbereich transparente Kunststoffgläser, vorzugsweise PDAC-, Polythiourethan- oder Episulfidgläser, oder mineralische Hartgläser, vorzugsweise Krongläser oder Flintgläser, und wenigstens eine auf den optischen Gläsern aufgebrachte Beschichtung, wobei die Beschichtung, ausgehend von der jeweiligen Vorderseite bzw. Rückseite des Kunststoffglases bzw. mineralischen Hartglases,
a) eine Antireflexschicht, welche alternierende diskrete Metalloxid-, Metallhydroxid- und/oder Metalloxidhydratschichten der Elemente Al, Si und/oder Ti umfasst, wobei wenigstens eine Siliziumoxid-, Siliziumhydroxid- und/oder Siliziumoxidhydratschicht am weitesten von der Vorderseite bzw. Rückseite des optischen Glases entfernt liegt,
b) eine Antifogschicht
umfasst, wobei die Antifogschicht erhältlich ist durch kovalente Anbindung eines Chlorsilans, vorzugsweise Trichlorosilan, Dichlorosilan, Chlorosilan, Dichloromethylsilan, Chlorodimethylsilan, Chloro(methyl)phenylsilan, Chlorophenylsilan, Dichlorophenylsilan, Ethyldichlorosilan, Diisobutylchlorosilan, Isobutyldichlorosilan und/oder Dichloroethylsilan, an die Antireflexschicht aus a) und anschließender Umsetzung mit einer Verbindung der Formel (I) in Gegenwart eines Platin- oder Rhodiumkatalysators, vorzugsweise Platinkatalysators.

Bei einer weiteren Ausführungsform umfassen die optischen Gläser, insbesondere Brillengläser, mit einer Antifog-Beschichtung Kunststoffgläser, vorzugsweise PDAC- oder Polythiourethangläser, und wenigstens eine auf den Kunststoffgläsern aufgebrachte Beschichtung, wobei die Beschichtung, ausgehend von der jeweiligen Vorderseite bzw. Rückseite der Kunststoffgläser wenigstens
a) eine Antireflexschicht in einer Gesamtschichtdicke aus einem Bereich von 97 nm bis 2000 nm, bevorzugt aus einem Bereich von 112 nm bis 1600 nm, weiter bevorzugt aus einem Bereich von 121 nm bis 1110 nm, besonders bevorzugt aus einem Bereich von 132 nm bis 760 nm und ganz besonders bevorzugt aus einem Bereich von 139 nm bis 496 nm, wobei die Antireflexschicht wenigstens eine Siliziumoxid-, Siliziumhydroxid- und/oder Siliziumoxidhydratschicht umfasst,
b) eine Antifogschicht
umfasst, wobei die Antifogschicht erhältlich ist durch kovalente Anbindung wenigstens eines Halogensilans an die Siliziumoxid-, Siliziumhydroxid- und/oder Siliziumoxidhydratschicht der Antireflexschicht aus a) oder durch Behandlung der mit einer Antireflexschicht a) beschichteten Kunststoffgläser in einem Niederdruck-Plasma mit reinem Wasserstoff und jeweils einer sich daran anschließenden Umsetzung mit wenigstens einer Verbindung der Formel (I), wobei vorzugsweise R = R¹ = R² = H, A = CH₂, x = 0-1, CₙHₘ = Alkyl linear mit n = 1-4, m = 2n, y = 1-7, R³ = Aₓ-CR²=CRR¹ oder OH ist.

Bei einer weiteren Ausführungsform umfasst das optische Glas mit einer Antifog-Beschichtung, ein Kunststoffglas oder ein mineralisches Hartglas und wenigstens eine auf dem optischen Glas aufgebrachte Beschichtung, wobei die Beschichtung, ausgehend von der Vorderseite oder der Rückseite des Kunststoffglases oder mineralischen Hartglases
a) optional eine Hartlackschicht,
b) eine Antireflexschicht, wobei die Antireflexschicht wenigstens zwei diskrete Schichten umfasst, und wenigstens eine der Schichten eine Siliziumoxid-, Siliziumhydroxid- und/oder Siliziumoxidhydratschicht umfasst,
c) eine Antifogschicht
umfasst, wobei die Antifogschicht erhältlich ist durch kovalente Anbindung eines Halogensilans an die Siliziumoxid-, Siliziumhydroxid und/oder Siliziumoxidhydratschicht der Antireflexschicht aus b) oder durch Behandlung der mit einer Antireflexschicht b) belegten Kunststoffgläser oder mineralischen Hartgläser in einem Niederdruck-Plasma mit reinem Wasserstoff und jeweils anschließender Umsetzung mit einer Verbindung der Formel (I) RR¹C=CR²-Aₓ-[O-CₙHₘ]_{y}-R³, wobei
R = H, C₁-C₁₀-Alkyl linear oder C₁-C₁₀-Alkyl verzweigt;
R¹ = H, C₁-C₁₀-Alkyl linear oder C₁-C₁₀-Alkyl verzweigt;
R² = H oder Me;
A = C₁-C₁₀-Alkyl linear oder C₁-C₁₀-Alkyl verzweigt, optional jeweils mit OH, NH₂ oder SO₂ funktionalisiert;
x = 0-1;
CₙHₘ = linear oder verzweigt, optional jeweils mit OH oder NH₂ funktionalisiert;
n = 1-10; m= 2n;
y = 0-20;
R³ = AₓCR²=CRR¹, SO₃Na, H oder OH.

Für den Fachmann ist es selbstverständlich, dass das erfindungsgemäße Verfahren zur Herstellung von optischen Gläsern mit Antifog-Beschichtung sowohl für optische Gläser mit und ohne individuelle Korrektur, z.B. der Sehstärke, als auch für optische Gläser mit weiterer Funktionalität, z.B. gefärbte optische Gläser, polarisierte optische Gläser oder selbsttönende optische Gläser, verwendet werden kann.

Zwei Ausführungsbeispiele des erfindungsgemäßen Verfahrens werden nachfolgend erläutert.

### Beispiel 1

Ein Glas mit handelsüblicher LotuTec Antireflexbeschichtung von ZEISS ohne CleanCoat-Veredelung wird mit reinem Dichloroethylsilan (CAS [1789-58-8]) in Stickstoffgasatmosphäre bei Raumtemperatur beschichtet und getrocknet. Die Überbeschichtung wird mit Toluol (anhydr.) abgewaschen bevor der nächste Prozessschritt erfolgt.

Danach wird das Glas für 30 min bei 60°C in eine Lösung aus 1.0g Divinyl-polyethylenglykol (Mn∼230g/mol; CAS [50856-26-3]) und 0.1 ml Katalysator (Platin(0)-1,3-divinyl-1,1,3,3-tetramethyldisiloxan (CAS [68478-92-2]) in Xylol) in 100mL getrocknetem Toluol getaucht.

Das beschichtete Glas wird mit VE Wasser gewaschen und getrocknet.

### Beispiel 2

Ein Glas mit handelsüblicher LotuTec Antireflexbeschichtung von ZEISS ohne CleanCoat-Veredelung wird mit einem Niederdruck-Plasma für 180s bei 500W aktiviert.

Danach wird das Glas mit Dichloroethylsilan (CAS: 1789-58-8) in Stickstoffgasatmosphäre bei Raumtemperatur beschichtet und getrocknet. Die Überbeschichtung wird mit Toluol (anhydr.) abgewaschen bevor der nächste Prozessschritt erfolgt.

Darauffolgend wird das Glas für 30 min bei 60°C in eine Lösung aus 1.0g Divinyl-polyethylenglykol (Mn∼230g/mol; CAS [50856-26-3]) und 0.1mL Katalysator (Platin(0)-1,3-divinyl-1,1,3,3-tetramethyldisiloxan (CAS [68478-92-2]) in Xylol) in 100mL getrocknetem Toluol getaucht.

Das beschichtete Glas wird mit VE Wasser gewaschen und getrocknet.

Charakterisierung der erfindungsgemäßen Antifog-Beschichtung Für eine visuelle Beurteilung wurden die mit einer erfindungsgemäßen Antifog-Beschichtung beschichteten optischen Gläser für 10 Sekunden in einem Abstand von 10 cm über ein 90°C warmes Wasserbad gehalten und anschließend auf ein vorzugsweise mit Text beschriebenes Papier gelegt. Je besser lesbar der Text ist, desto besser fiel die visuelle Beurteilung der optischen Gläser aus.

Im Vergleich zu den als Ausgangsmaterial in den Beispielen 1 und 2 eingesetzten optischen Gläsern waren die mit einer erfindungsgemäßen Antifog-Beschichtung beschichteten optischen Gläser der Beispiele 1 und 2 deutlich weniger beschlagen und ermöglichten somit eine deutlich bessere Lesbarkeit eines darunter liegenden Textes.

## Patentansprüche

1. Verfahren zur Herstellung eines optischen Glases mit einer Antifog-Beschichtung, mit den Schritten:
a. zur Verfügung stellen eines optischen Glases,
b. Herstellen einer Schicht, die Si-H-Gruppen aufweist,
c. Reagierenlassen der Silangruppen mit einer Verbindung, die hydrophile Gruppen und wenigstens eine mit der Silangruppe reaktive Gruppe aufweist.

2. Verfahren nach Anspruch 1, **dadurch gekennzeichnet, dass** Schritt b. erfolgt durch Aufbringen eines Halogensilans.

3. Verfahren nach Anspruch 1, **dadurch gekennzeichnet, dass** Schritt b. erfolgt durch Aufbringen von SiOx unter reduktiven Bedingungen in Anwesenheit von Wasserstoff.

4. Verfahren nach Anspruch 1, **dadurch gekennzeichnet, dass** Schritt b. erfolgt durch Reduktion von Si-O-Gruppen an der Oberfläche des Glases mit radikalischem Wasserstoff.

5. Verfahren nach Anspruch 4, **dadurch gekennzeichnet, dass** die Reaktion in einem Plasma mit Wasserstoffgas erfolgt.

6. Verfahren nach einem der Ansprüche 1 bis 5, **dadurch gekennzeichnet, dass** in Schritt c. eine Hydrosilylierung erfolgt.

7. Verfahren nach Anspruch 6, **dadurch gekennzeichnet, dass** die in Schritt c. eingesetzte Verbindung wenigstens eine reaktive C=C-Doppelbindung, bevorzugt wenigstens eine Vinylgruppe aufweist.

8. Verfahren nach Anspruch 7, **dadurch gekennzeichnet, dass** die in Schritt c. eingesetzte Verbindung eine Vinyl-Polyoxyalkylenverbindung ist.

9. Verfahren nach einem der Ansprüche 1-8, **dadurch gekennzeichnet, dass** das optische Glas eine Antireflex-Beschichtung aufweist.

10. Verfahren nach Anspruch 9, **dadurch gekennzeichnet, dass** die Antireflex-Beschichtung SiOx-haltig ist.

11. Verfahren nach einem der Ansprüche 1-8, **dadurch gekennzeichnet, dass** das optische Glas an der Oberfläche SiOx-haltig ist.

12. Verfahren nach einem der Ansprüche 1-11, **dadurch gekennzeichnet, dass** die hydrophilen Gruppen Polyoxyalkylengruppen, vorzugsweise Polyethylenoxid- und/oder Polypropylenoxidgruppen aufweisen.

13. Verfahren nach Anspruch 12, **dadurch gekennzeichnet, dass** die hydrophilen Gruppen Polyoxyalkylengruppen mit einer Polyoxyalkylen-Kettenlänge von 2 bis 10, vorzugsweise 2 bis 6, weiter vorzugsweise 3 bis 5 aufweisen.

14. Optisches Glas mit einer Antifog-Beschichtung, erhältlich durch ein Verfahren nach einem der Ansprüche 1-13.

15. Optisches Glas mit einer Antifog-Beschichtung, wobei das optische Glas ein Kunststoffglas oder ein mineralisches Hartglas und wenigstens eine auf dem optischen Glas aufgebrachte Beschichtung umfasst, wobei die Beschichtung, ausgehend von der Vorderseite oder der Rückseite des Kunststoffglases oder mineralischen Hartglases
a) optional eine Hartlackschicht,
b) eine Antireflexschicht, wobei die Antireflexschicht wenigstens zwei diskrete Schichten umfasst, und wenigstens eine der Schichten eine Siliziumoxid-, Siliziumhydroxid- und/oder Siliziumoxidhydratschicht umfasst,
c) eine Antifogschicht
umfasst, wobei die Antifogschicht erhältlich ist durch kovalente Anbindung eines Halogensilans an die Siliziumoxid-, Siliziumhydroxid und/oder Siliziumoxidhydratschicht der Antireflexschicht aus b) oder durch Behandlung der mit einer Antireflexschicht b) belegten Kunststoffgläser oder mineralischen Hartgläser in einem Niederdruck-Plasma mit reinem Wasserstoff und jeweils anschließender Umsetzung mit einer Verbindung der Formel (I) RR¹C=CR²-Aₓ-[O-CₙHₘ]_{y}-R³, wobei
R = H, C₁-C₁₀-Alkyl linear oder C₁-C₁₀-Alkyl verzweigt;
R¹ = H, C₁-C₁₀-Alkyl linear oder C₁-C₁₀-Alkyl verzweigt;
R² = H oder Me;
A = C₁-C₁₀-Alkyl linear oder C₁-C₁₀-Alkyl verzweigt, optional jeweils mit OH, NH₂ oder SO₂ funktionalisiert;
x = 0-1;
CₙHₘ = linear oder verzweigt, optional jeweils mit OH oder NH₂ funktionalisiert;
n = 1-10; m= 2n;
y = 0-20;
R³ = AₓCR²=CRR¹, SO₃Na, H oder OH.

## Claims

1. Process for producing an optical glass with an anti-fog coating comprising the steps of:
a. providing an optical glass,
b. preparing a layer having Si-H groups,
c. reacting the silane groups with a compound having hydrophilic groups and at least one group reactive to the silane group.

2. Process according to Claim 1, **characterized in that** step b. is effected by applying a halosilane.

3. Process according to Claim 1, **characterized in that** step b. is effected by applying SiOx under reducing conditions in the presence of hydrogen.

4. Process according to Claim 1, **characterized in that** step b. is effected by reduction of Si-O groups on the surface of the glass with radical hydrogen.

5. Process according to Claim 4, **characterized in that** the reaction takes place in a plasma with hydrogen gas.

6. Process according to any one of Claims 1 to 5, **characterized in that** in step c. a hydrosilylation is carried out.

7. Process according to Claim 6, **characterized in that** the compound used in step c. has at least one reactive C=C double bond, preferably at least one vinyl group.

8. Process according to Claim 7, **characterized in that** the compound used in step c. is a vinyl polyoxyalkylene compound.

9. Process according to any one of Claims 1-8, **characterized in that** the optical glass has an anti-reflective coating.

10. Process according to Claim 9, **characterized in that** the anti-reflective coating contains SiOx.

11. Process according to any one of Claims 1-8, **characterized in that** the optical glass is SiOx-containing on the surface.

12. Process according to any one of Claims 1-11, **characterized in that** the hydrophilic groups comprise polyoxyalkylene groups, preferably polyethylene oxide and/or polypropylene oxide groups.

13. Process according to Claim 12, **characterized in that** the hydrophilic groups comprise polyoxyalkylene groups having a polyoxyalkylene chain length of 2 to 10, preferably 2 to 6, more preferably 3 to 5.

14. Optical glass with an anti-fog coating, obtainable by a process according to any one of Claims 1-13.

15. Optical glass with an anti-fog coating, wherein the optical glass comprises a plastic glass or a mineral hardened glass and at least one coating applied to the optical glass, wherein the coating, proceeding from the frontal side or the rear side of the plastic glass or mineral hardened glass
a) optionally comprises a hard lacquer layer,
b) comprises an anti-reflective layer, wherein the anti-reflective layer comprises at least two discrete layers, and at least one of the layers comprises a silicon oxide, silicon hydroxide and/or silicon oxide hydrate layer,
c) comprises an anti-fog layer
wherein the anti-fog layer is obtainable by covalent binding of a halosilane to the silicon oxide, silicon hydroxide and/or silicon oxide hydrate layer of the anti-reflective layer of b) or by treating the plastic glasses or mineral hardened glasses coated with an anti-reflective layer b) in a low-pressure plasma with pure hydrogen and in each case subsequently reacting with a compound of the formula (I) RR¹C=CR²-Aₓ-[O-CₙHₘ]_{y}-R³, where
R = H, linear C₁-C₁₀-alkyl or branched C₁-C₁₀-alkyl;
R¹ = H, linear C₁-C₁₀-alkyl or branched C₁-C₁₀-alkyl;
R² = H or Me;
A = linear C₁-C₁₀-alkyl or branched C₁-C₁₀-alkyl, in each case optionally functionalized with OH, NH₂ or SO₂;
x = 0-1;
CₙHₘ = linear or branched, in each case optionally functionalized with OH or NH₂;
n = 1-10; m= 2n;
y = 0-20;
R³ = AₓCR²=CRR¹, SO₃Na, H or OH.

## Revendications

1. Procédé de fabrication d'un verre optique muni d'un revêtement antibuée, comprenant les étapes suivantes :
a. la mise à disposition d'un verre optique,
b. la fabrication d'une couche qui comprend des groupes Si-H,
c. la mise en réaction des groupes silane avec un composé qui comprend des groupes hydrophiles et au moins un groupe réactif avec le groupe silane.

2. Procédé selon la revendication 1, **caractérisé en ce que** l'étape b. a lieu par application d'un halogénosilane.

3. Procédé selon la revendication 1, **caractérisé en ce que** l'étape b. a lieu par application de SiOx en conditions réductrices en présence d'hydrogène.

4. Procédé selon la revendication 1, **caractérisé en ce que** l'étape b. a lieu par réduction de groupes Si-O sur la surface du verre avec de l'hydrogène radicalaire.

5. Procédé selon la revendication 4, **caractérisé en ce que** la réaction a lieu dans un plasma avec de l'hydrogène gazeux.

6. Procédé selon l'une quelconque des revendications 1 à 5, **caractérisé en ce qu'**une hydrosilylation a lieu à l'étape c.

7. Procédé selon la revendication 6, **caractérisé en ce que** le composé utilisé à l'étape c. comprend au moins une double liaison C=C réactive, de préférence au moins un groupe vinyle.

8. Procédé selon la revendication 7, **caractérisé en ce que** le composé utilisé à l'étape c. est un composé de vinyl-polyoxyalkylène.

9. Procédé selon l'une quelconque des revendications 1 à 8, **caractérisé en ce que** le verre optique comprend un revêtement antireflets.

10. Procédé selon la revendication 9, **caractérisé en ce que** le revêtement antireflets contient SiOx.

11. Procédé selon l'une quelconque des revendications 1 à 8, **caractérisé en ce que** le verre optique contient SiOx sur la surface.

12. Procédé selon l'une quelconque des revendications 1 à 11, **caractérisé en ce que** les groupes hydrophiles comprennent des groupes polyoxyalkylène, de préférence des groupes polyoxyde d'éthylène et/ou polyoxyde de propylène.

13. Procédé selon la revendication 12, **caractérisé en ce que** les groupes hydrophiles comprennent des groupes polyoxyalkylène ayant une longueur de chaîne polyoxyalkylène de 2 à 10, de préférence de 2 à 6, de manière davantage préférée de 3 à 5.

14. Verre optique muni d'un revêtement antibuée, pouvant être obtenu par un procédé selon l'une quelconque des revendications 1 à 13.

15. Verre optique muni d'un revêtement antibuée, le verre optique comprenant un verre en plastique ou un verre dur minéral et au moins un revêtement appliqué sur le verre optique, le revêtement comprenant, en partant du côté avant ou du côté arrière du verre en plastique ou du verre dur minéral :
a) éventuellement une couche de vernis dur,
b) une couche antireflets, la couche antireflets comprenant au moins deux couches discrètes, et au moins une des couches comprenant une couche d'oxyde de silicium, d'hydroxyde de silicium et/ou d'oxyde de silicium hydraté,
c) une couche antibuée,
la couche antibuée pouvant être obtenue par liaison covalente d'un halogénosilane sur la couche d'oxyde de silicium, d'hydroxyde de silicium et/ou d'oxyde de silicium hydraté de la couche antireflets de b) ou par traitement des verres en plastique ou des verres durs minéraux revêtus avec une couche antireflets b) dans un plasma à pression basse avec de l'hydrogène pur, puis à chaque fois mise en réaction avec un composé de formule (I) RR¹C=CR²-Aₓ-[O-CₙHₘ]_{y}-R³, dans laquelle
R = H, alkyle en C₁-C₁₀ linéaire ou alkyle en C₁-C₁₀ ramifié ;
R¹ = H, alkyle en C₁-C₁₀ linéaire ou alkyle en C₁-C₁₀ ramifié ;
R² = H ou Me ;
A = alkyle en C₁-C₁₀ linéaire ou alkyle en C₁-C₁₀ ramifié, à chaque fois éventuellement fonctionnalisé avec OH, NH₂ ou SO₂ ;
x = 0 à 1 ;
CₙHₘ = linéaire ou ramifié, à chaque fois éventuellement fonctionnalisé avec OH ou NH₂ ;
n = 1 à 10 ; m = 2n ;
y = 0 à 20 ;
R³ = AₓCR²=CRR¹, SO₃Na, H ou OH.
